# EUROPÄISCHE PATENTSCHRIFT

(11) **EP 2 904 888 B1**
(45) Veröffentlichungstag und Bekanntmachung des Hinweises auf die Patenterteilung: **13.05.2020**
(21) Anmeldenummer: 15153636.4
(22) Anmeldetag: 03.02.2015
(51) Int. Cl.: A01B 59/043, A01B 61/02

(54) **Geräteträgervorrichtung für landwirtschaftliche Geräte**
Device holder for agricultural devices
Dispositif de support d'équipement pour des machines agricoles

(30) Priorität: 07.02.2014 IT BZ20140007
(43) Veröffentlichungstag der Anmeldung: 12.08.2015
(73) Patentinhaber: Seppi M. SpA, 39052 Kaltern (IT)
(72) Erfinder: Seppi, Lorenz, 39052 Kaltern (IT); Ciprian, Luca, 39052 Kaltern (IT)
(74) Vertreter: Ausserer, Anton

(56) Entgegenhaltungen:
- EP-A1- 1 690 443
- DE-U1-202006 006 420
- FR-A1- 2 860 125

## Beschreibung

Die vorliegende Erfindung bezieht sich auf eine Geräteträgervorrichtung für landwirtschaftliche Geräte.

### Stand der Technik

Es sind landwirtschaftliche Geräte bekannt, die dazu bestimmt sind, außerhalb der Außenabmessungen der Zugmaschine zu arbeiten. Diese Geräte erfahren oftmals Belastungen, die größer sind als jene von Geräten, die innerhalb der Abmessungen der Zugmaschine angebaut sind. Die Patente BERTI, MUETHING, MCCONNELL beschreiben derartige Maschine.

So wird in der Patentanmeldung EP 1 690 443 ein Häcksler für Gras, Hecken, Ranken und ähnlichem beschrieben, umfassend weinen Rahmen, der mit der einem Zugmittel abnehmbar verbunden ist, eine Häckseleinheit für zu zerkleinernenden Gras, Hecken, Ranken, und ähnlichem, ein Paar von aneinander liegenden Armen, die sich vor allem in Längsrichtung erstrecken, von denen jeder mit einem ersten Ende, das dem Rahmen über erste Anlenkmittel zugeordnet ist, und mit einem zweiten Ende versehen ist, das der Häckseleinheit über zweite Anlenkmittel zugeordnet ist, Antriebsmittel der Häckseleinheit und der Arme. Die ersten Anlenkmittel umfassen einen dem Rahmen angehörenden ersten Formkörper und einen zweiten Formkörper, der über einen ersten Drehbolzen mit dem ersten Formkörper und mit einem der Arme und über einen zweiten Drehbolzen mit den anderen der Arme verbunden ist, Federmittel, die dem ersten und dem zweiten Formkörper zugeordnet sind, die diesen gegenüber dem ersten Formkörper elastisch drehbar gestalten.

In dieser europäische Patentanmeldung ist daher eine Häcksler beschrieben, der über zwei angelenkte Arme mit einem Rahmen verbunden ist, der seinerseits durch einen Zugmittel getragen wird. Die Schwenkmöglichkeit des Häckslers gegenüber dem Rahmen ist damit durch ein Gelenksparallelogramm gebildet, das für Fluchtungsfehler und ungenaue Zuordnungen zwischen den vier Anlenkungen anfällig ist. Die vorgeschlagene Lösung ist überdies nicht geeignet, Stöße zu dämpfen, denen der Häcksler ausgesetzt ist.

In der europäische Patentanmeldung EP 1 266 551 ist hingegen ein Arbeitsgerät für den Anbau an einem Fahrzeug beschrieben. Dieses Arbeitsgerät kann ein Mäher, ein Häcksler, ein Mulcher zur Bearbeitung von Böden oder ähnlichen seine, mit einem Anbaubock, einem Arbeitswerkzeug und einem dieses verbindenden Schwenkarm, der um eine senkrechte Achse am Anbaubock für die Montage an einem Fahrzeug drehbar ist. Um, bei einem derartigen Arbeitsgerät, eine konstruktiv einfache, robuste und sichere Anfahr- bzw. Überlastungssicherheit zu erzielen, die nach Überwindung eines Hindernisses unter Vermeidung desselben, eine automatische Rückkehr des Arbeitsgerätes in seine vorgegebenen Basisarbeitsstellung erlaubt, sieht die Erfindung vor, dass der Schwenkarm drehbar am Anbaubock auch um eine horizontale Achse angelenkt ist und dass der starre und biegsame Schwenkarm den Anbaubock des Arbeitsgerätes bzw. den Schwenkarm der Art verbindet, dass der Schwenkarm in der Basisarbeitsstellung des Werkzeuges mit dem Schwenkarm weder eine senkrechte noch eine horizontale Ebene bildet. Um beim Auftreffen seitlich auf einem Hindernis das Arbeitswerkzeug zu verstellen, ist der Geräteträgerarm um eine senkrechte Achse herum drehbar. Auch in diesem Fall ist der Tragarm wegen seiner Anlenkung Verschleiß und Fluchtungsfehlern ausgesetzt, die auf die Anlenkung selbst zurückzuführen sind.

### Beschreibung:

Die Erfindung bezieht sich auf ein Anschlusssystem zwischen einer Antriebseinheit, typischerweise einem Traktor, und einem landwirtschaftlichen Gerät, das die Kontrolle und die Dämpfung der Belastungen erlaubt, die durch die Arbeit mit dem Gerät selbst zusammenhängen. Das fragliche Gerät kann ein Häcksler, Mäher, Mulcher oder ein beliebiges anderes Gerät oder landwirtschaftliche Maschine sein.

Das Anhängsystem beruht auf dem gemäß internationalen Normen standardisierten System der Dreipunktaufhängung , das im Patent (WALTERSCHEID) bzw. im österreichischen Patent 404 920 (AT 404 920 B) beschrieben ist. Typischerweise ist die Dreipunktaufhängung in zwei Teile aufgeteilt: der erste der Traktor, der zweite das Gerät selbst. Der Traktor verfügt über zwei Hubarme, die mit dem Rahmen des Traktors selbst verbunden sind, und eine obere mittige Verbindung (Zug-/Druckstange), "dritter Punkt" genannt. Das Gerät verfügt über einen starren Rahmen mit unteren Hubbolzen und einen oberen mittigen Bolzen. Die Abmessungen, die Achsabstände und ihre Positionierung werden durch geeignete internationale Normen festgelegt.

Die vorliegende Erfindung mit den Merkmalen des Anspruchs 1 unterscheidet sich vom Stand der Technik dadurch, dass die beiden unteren Bolzen des Gerätes nicht parallel zueinander gebunden sind. Dies ist nämlich eine der Bindungen, die im allgemeinen von einer Dreipunktaufhängung für ein landwirtschaftliches Gerät verlangt wird.

Die Kinematik der beschriebenen Aufhängung in dieser Erfindung erlaubt eine Winkelbildung zwischen dem einen und den anderen Bolzen. Gemäß der Erfindung ist die Aufhängung im Stande, die Bolzenachsen auf derselben horizontalen Ebene zu halten oder mindestens dass sie zur selben horizontalen Ebene parallel sind. Sie erlaubt hingegen eine Änderung der Winkel der Achsen der unteren Bolzen gegenüber einer senkrechten Ebene. Die Kugelgelenke, die im allgemeinen zwischen den Hubarmen des Traktors und den Bolzen der Aufhängung eines landwirtschaftlichen Gerätes zwischengeschaltet sind, die dazu bestimmt sind, Fluchtungsfehler der gesamten Aufhängung in einer beliebigen Richtung auszugleichen, erlauben ohne Störungen die beschriebene Änderung des Winkels.

### Unter den verschiedenen Ausführungsmöglichkeiten:

Gelenk mit senkrechter Achse, die in der Struktur der Aufhängung des Gerätes eingebaut und in der Verbindung zwischen dem unteren linken Bolzen und dem unteren rechten Bolzen integriert ist.

Biegsame Elemente, die eine umkehrbare, elastische Verformung der Aufhängung des Gerätes in einer oder mehreren Richtungen erlauben.

Die Bewegung, die so ermöglicht wird, ist grundsätzlich um den mechanischen und hydraulischen Bestandteilen die Belastungen übertragen zu können, die vom Gerät oder vom Traktor abstammen. Insbesondere können Federn oder Hydrozylinder verwendet werden, um auf kontrollierter Art und Weise diese Belastungen absorbieren zu können oder Sicherheitselemente, die dazu bestimmt sind, nachzugeben, sobald eine bestimmte Belastung überschritten wird.

Unter Kontrolle der Belastungen auf der Aufhängung, indem sie gedämpft oder begrenzt werden, ist es möglich, strukturelle Brüche zu vermeiden, die auf Zusammenstöße mit Hindernissen oder auf andere, ähnliche Situationen zurückzuführen sind. Dies ist daher das Hauptmerkmal eines stoßfesten Systems. Die Auswahl des geeignetesten, mechanischen oder hydraulischen Elementes ist die Aufgabe des Konstrukteurs der Gerätschaft gemäß den Anforderungen der Anwendung.

### Die Vorteile der Erfindung gegenüber dem Stand der Technik sind:

Stoßfeste Sicherheit, die in der Aufhängung selbst integriert ist

### Größere Drehwinkel

Verstellung des stoßfesten Systems in einem peripheren Bereich der Maschine (hat keinen Einfluss auf die Positionierung des Getriebes usw.).

Auch wenn die Winkelstellung geändert wird, verbleibt das Gerät auf derselben Ebene parallel zur horizontalen Ebene.

Es besteht keine Abhängigkeit von der Richtung der Belastung und daher ist eine Frontaufhängung geeignet, daher für geschobene Geräte, so wie für eine Heckaufhängung, daher für gezogene Geräte.

Weitere Merkmale und Einzelheiten gehen aus den Patentansprüchen und aus der folgenden Beschreibung von bevorzugten in der beigefügten Zeichnung dargestellten Ausführungsformen hervor. Es zeigen:

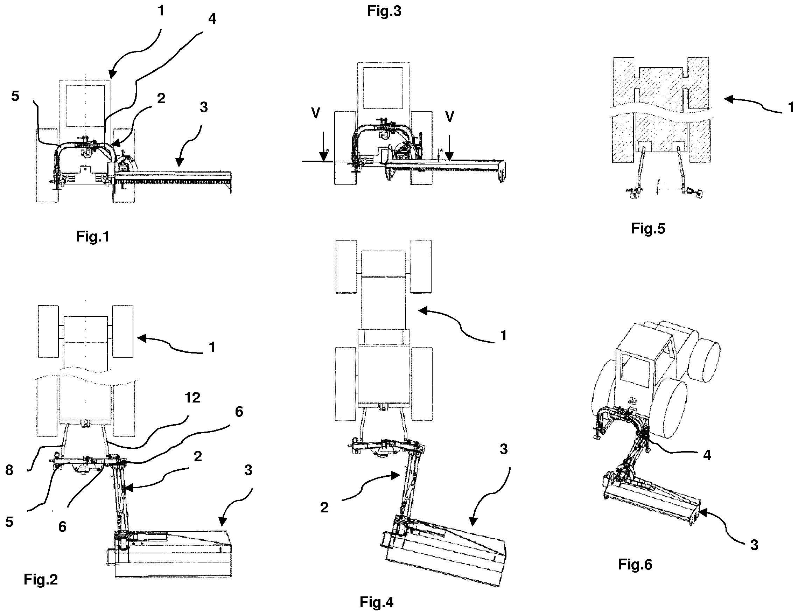

Figur 1 eine schematische Ansicht von hinten eines von einem Traktor getragenen Häckslers, in einer seitlich nicht belasteten Stellung,
Figur 2 eine schematische Ansicht von oben der Figur 1, in einer seitlich nicht belasteten Stellung,
Figur 3 und 4 jeweils Ansichten wie Figur 1 und 2, jedoch in einer seitlich belasteten Stellung,
Figur 5 einen Schnitt längs der Schnittlinie V-V aus Figur 3,
Figur 6 eine schematische Perspektive der vorangehenden Figuren,

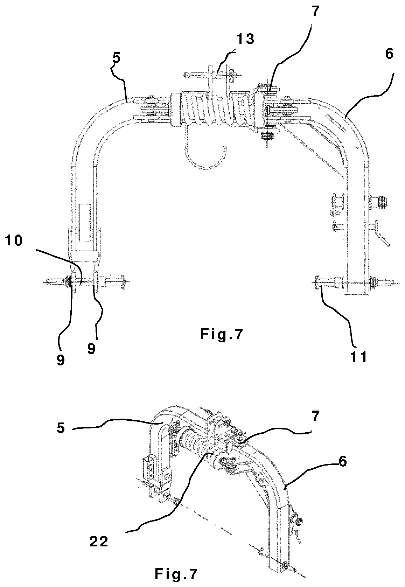

Figur 7 einer vordere Ansicht eines an einer Dreipunktaufhängung anzulenkenden Tragbügels,
Figur 8 eine Perspektive der Figur 7, und
Figur 9 eine Ansicht von oben aus Figur 1.

In den Figuren ist mit der Bezugsziffer 1 ein Traktor angegeben, an dem auf bekannte Art und Weise ein Geräteträger 2, mit einem Gerät 3 angelenkt ist, im vorliegenden Fall ein Häcksler. Der Geräteträger 2 besteht aus einem Bügel 4, der in eine erste Flanke 5 und in eine zweite Flanke 6 unterteilt ist, die über ein Gelenk 7 an der ersten Flanke 5 angelenkt ist. An der ersten Flanke 5 ist ein Ende eines Armes 8 befestigt, dessen anderes Ende an der hinteren Seite des Traktors 1 befestigt ist. Für die Befestigung ist das untere Ende der ersten Flanke 5 mit zwei Flanschen 9 versehen, die einen Bolzen 10 für die Anlenkung des Armes 8 lagern. Am unteren Ende der zweite Flanke 6 ist hingegen über einen Bolzen 11 ein Arm 12 angelenkt, dessen anderes Ende vom Traktor 1 getragen wird. Die erste Flanke 5 weist im Bereich ihrer oberen Traverse einen Bolzen 13 auf um auf bekannte Art und Weise einen nicht gezeigten Schwenkarm anzulenken, der gleichfalls am Traktor 1 angelenkt ist.

Somit bilden die Bolzen 10, 11 und 13 für den Fachmann gut bekannte und daher nicht weiter erläuterte Dreipunktaufhängung.

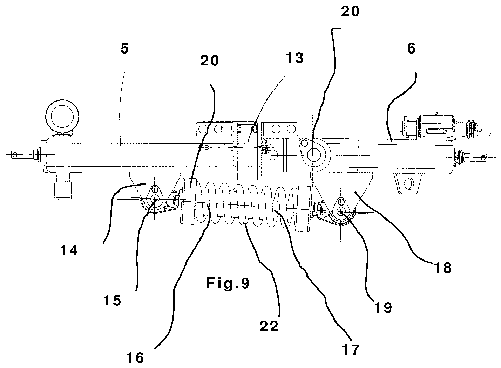

Wie insbesondere in Figur 9 gezeigt, ist die Traverse der ersten Flanke 5 mit einem Flansch 14 versehen, der ein Gelenk 15 aufnimmt, an dem ein Zylinder 16 angelenkt ist, dessen Kolbenstange 17 an seinem freien Ende über ein Gelenk 19 an einem Flansch 18 angelenkt ist. Zwischen einem Anschlag 20 der Zylinderbasis 16 und einem Anschlag im Bereich des freien Ende der Kolbenstange 17 ist eine Feder 23 gespannt, die einer Drehung der zweiten Flanke 6 im Sinne der Zusammendrückung der Feder entgegenwirkt. An der beweglichen Flanke 6 ist auf eine nicht gezeigte Weise der Geräteträger 2 im Bereich einer ihrer Enden befestigt, deren anderes Ende das Gerät 3 trägt.

Sobald das Gerät 3, außerhalb der Außenabmessungen des Traktors, auf ein Hindernis trifft, veranlasst dieses das Gerät sich möglichst innerhalb der Außenabmessungen des Traktors zurückzuziehen und wird von neuem außerhalb dieser Außenabmessungen gebracht, sobald das Hindernis überwunden ist.

### Legende

- 1.: Traktor
- 2.: Geräteträger
- 3.: Gerät
- 4.: Bügel
- 5.: erste Flanke
- 6.: zweite Flanke
- 7.: Gelenk
- 8.: Arm
- 9.: Flanschen
- 10.: Bolzen
- 11.: Bolzen
- 12.: Arm
- 13.: Bolzen
- 14.: Flanschen
- 15.: Gelenk
- 16.: Zylinder
- 17.: Kolbenstange
- 18.: Flansch
- 19.: Gelenk
- 20.: Anschlag
- 21.: Anschlag
- 22.: Feder

## Patentansprüche

1. Geräteträgervorrichtung für landwirtschaftliche Geräte, insbesondere eine Häckseleinheit für Gras, Hecken, Ranken und ähnlichem, umfassend einen Rahmen (4), der mit einem Zugmittel(1) abnehmbar verbindbar ist, und umfassend ein Paar von aneinander liegenden Armen, die sich vor allem in Längsrichtung erstrecken, und von denen jeder mit einem ersten Ende (8, 12), das dem Rahmen über erste Anlenkmittel zuordenbar ist, und mit einem zweiten Ende versehen ist, das dem Zugmittel (1) des landwirtschaftlichen Gerätes über zweite Anlenkmittel zuordenbar ist, wobei der Rahmen aus einem Bügel (4) besteht, der in eine erste Flanke (5) und in eine zweite Flanke (6) unterteilt ist, von denen mindestens eine Flanke (5,6) dazu ausgestattet ist das Gerät zu lagern, **dadurch gekennzeichnet, dass** die zweite Flanke (6) über ein erstes Gelenk (7) an der ersten Flanke (5) drehbar angelenkt ist und die Drehung gegenüber der anderen Flanke (5) elastisch belastet ist.

2. Vorrichtung nach Anspruch 1, **dadurch gekennzeichnet, dass** die erste Flanke (5) eine Traverse umfasst, die mit einem Flansch (14) versehen ist, der ein zweites Gelenk (15) aufnimmt, an dem ein Zylinder (16) angelenkt ist, dessen Kolbenstange (17) an ihrem freien Ende an einem Flansch (18) über ein drittes Gelenk (19) befestigt ist, wobei zwischen einem Anschlag (20) der Zylinderbasis (16) und einem Anschlag (21) im Bereich des freien Endes der Kolbenstange (17) eine Feder (22) angeordnet ist, die einer Drehung mindestens einer ersten Flanke (5, 6) im Sinne einer Zusammendrückung der Feder selbst entgegenwirkt, wobei an der beweglichen Flanke (6) ein Geräteträger (2) im Bereich eines der Enden des Geräteträgers (2) befestigt ist, dessen anderes Ende dazu ausgestattet ist das Gerät (3) zu tragen.

3. Vorrichtung nach Anspruch 1, **dadurch gekennzeichnet, dass** mindestens einer der unteren Bolzen (10 oder 11) einer Dreipunktaufhängung (10, 11, 13) frei ist, den Winkel der eigenen Achse gegenüber einer senkrechten Ebene zu verändern, die zu den Achsen der anderen Bolzen (10 oder 11, 13) parallel ist, und dadurch, dass die unteren Bolzen (10, 11) zur horizontalen Ebene mindestens parallel bleiben,
wobei sich die Dreipunktaufhängung dadurch ergibt, dass das untere Ende der ersten Flanke (5) mit zwei Flanschen (9) versehen ist, die einen unteren Bolzen (10) für die Anlenkung eines der Arme (8) lagern, wobei am unteren Ende der zweite Flanke (6) über einen zweiten unteren Bolzen (11) der zweite Arm (12) angelenkt ist, und wobei die erste Flanke (5) im Bereich ihrer oberen Traverse einen oberen Bolzen (13) aufweist.

4. Vorrichtung nach Anspruch 1, **dadurch gekennzeichnet, dass** die gegenseitige Drehung der Flanken (5, 6) durch das erste Gelenk (7) die Flanken (5,6) elastisch belastet.

5. Vorrichtung nach Anspruch 3, **dadurch gekennzeichnet, dass** die Dreipunktaufhängung in einer senkrechten Ebene angelenkt ist, um die Winkelstellung ihrer Bolzen (10, 11) verändern zu können.

6. Vorrichtung nach Anspruch 5, **dadurch gekennzeichnet, dass** das erste Gelenk in vertikaler Richtung gesehen zwischen dem unteren, linken Bolzen (10) der am untere Ende der ersten Flanke (5) ist und dem unteren rechten Bolzen (11) der am unteren Ende der zweite Flanke (6) ist positioniert ist.

## Claims

1. A tool-holding device for agricultural machines, in particular a mulching unit for cutting grass, hedges, tendrils and the like, comprising a frame (4), which is designed to be removably connected with traction means (1), and comprising a pair of adjacent, mainly longitudinally extending arms, each having a first end (8,12) associated with the frame via first articulation means and a second end associated with the traction means (1) of the agricultural machine via second articulation means,
wherein the frame consists of a stirrup (4), which is composed of a first leg (5) and a second leg (6), with at least one leg (5, 6) being designed to support the machine, **characterized in that** the second leg (6) is rotatably connected via a first joint (7) to the first leg (5) and the rotation relative to the other leg (5) is elastically loaded.

2. A device as claimed in claim 1, **characterized in that** the first leg (5) comprises a cross member equipped with a flange (14), which accommodates a second joint (15) with a cylinder (16) articulated thereto, whose stem (17) is fixed at its free end to a flange (18) via a third joint (19), a spring (22) being arranged between an abutment (20) of the base of the cylinder (16) and an abutment (21), at the free end of the stem (17), for counteracting a rotation of at least a first leg (5, 6) in the direction of compression of the spring itself, a tool holder (2) being fixed to the moving leg at one of the ends of the tool holder (2), the other end whereof is designed to carry the tool (3).

3. A device as claimed in claim 1, **characterized in that** at least one of the lower pins (10 or 11) of a three-point hitch (10,11,13) is free to change the angle of its axis with respect to a vertical plane parallel to the axes of the other pins (10 or 11.13) and **in that** the lower pins remain at least parallel to the horizontal plane, wherein the three-point hitch is in such an arrangement that the lower end of the first leg (5) has two flanges (9), which support a lower pin (10) for articulation of one of the arms (8), the second arm (12) being articulated at the lower end of the second leg (6) via a second lower pin (11), wherein the first leg (5) has an upper pin (13) in the area of their upper cross member.

4. A device as claimed in claim 1, **characterized in that** the legs (5,6) are elastically loaded via the first joint (7) to rotate relative to each other.

5. A device as claimed in claim 3, **characterized in that** the three-point hitch is articulated in a perpendicular plane to be able to change the angular position of its pins (10,11).

6. A device as claimed in claim 5, **characterized in that** the first joint in the vertical direction is placed between the left lower pin (10) at the lower end of the first leg (5) and the right lower pin (11) at the lower end of the second leg (6).

## Revendications

1. Dispositif porte-outils pour machines agricoles, notamment unité de broyage pour la coupe d'herbe, de haies, de tendons et similaires, comprenant un châssis (4), conçu pour être relié de façon amovible avec des moyens de traction (1), et comprenant une paire de bras adjacents, s'étendant principalement dans une direction longitudinale, chacun ayant une première extrémité (8, 12) associée au châssis par des premiers moyens d'articulation et une deuxième extrémité associée aux moyens de traction (1) de la machine agricole par des deuxièmes moyens d'articulation,
dans lequel le châssis est constitué d'un étrier (4), se composant d'une première branche (5) et d'une seconde branche (6), au moins une branche (5, 6) étant conçue pour soutenir la machine, **caractérisé en ce que** la deuxième branche (6) est reliée de manière rotative par une première articulation (7) à la première branche (5) et la rotation par rapport à l'autre branche (5) est sous contrainte élastique.

2. Dispositif selon la revendication 1, **caractérisé en ce que** la première branche (5) comprend une traverse munie d'une bride (14), logeant une deuxième articulation (15) avec un cylindre (16) articulé à celle-ci, dont la tige (17) est fixée à son extrémité libre à une bride (18) par une troisième articulation (19), un ressort (22) étant disposé entre une butée (20) de la base du cylindre (16) et une butée (21) à l'extrémité libre de la tige (17), pour exercer une force antagoniste contre une rotation d'au moins une première branche (5, 6) dans le sens de la compression du ressort, un porte-outils (2) étant fixé à la branche mobile à l'une des extrémités du porte-outils (2), l'autre extrémité étant conçue pour porter l'outil (3).

3. Dispositif selon la revendication 1, **caractérisé en ce qu'**au moins l'un des goujons inférieurs (10 ou 11) d'un attelage trois points (10,11,13) est libre de modifier l'angle de son axe par rapport à un plan vertical parallèle aux axes des autres goujons (10 ou 11.13) et **en ce que** les goujons inférieurs restent au moins parallèles au plan horizontal, dans lequel l'attelage trois points est dans une telle disposition que l'extrémité inférieure de la première branche (5) comporte deux brides (9), qui soutiennent un goujon inférieur (10) pour l'articulation de l'un des bras (8), le second bras (12) étant articulé à l'extrémité inférieure de la deuxième branche (6) par un second goujon inférieur (11), dans lequel la première branche (5) comporte un goujon supérieur (13) dans la zone de leur traverse supérieure.

4. Dispositif selon la revendication 1, **caractérisé en ce que** les branches (5,6) sont contraints élastiquement par le biais de la première articulation (7) pour tourner l'une par rapport à l'autre.

5. Dispositif selon a revendication 3, **caractérisé en ce que** l'attelage trois points est articulé dans un plan perpendiculaire pour pouvoir modifier la position angulaire de ses goujons (10,11).

6. Dispositif selon la revendication 5, **caractérisé en ce que** la première articulation dans la direction verticale est située entre le goujon inférieur gauche (10) à l'extrémité inférieure de la première branche (5) et le goujon inférieur droit (11) à l'extrémité inférieure de la deuxième branche (6).
